# FASCICULE DE BREVET EUROPEEN

(11) **EP 1 695 640 B1**
(45) Date de publication et mention de la délivrance du brevet: **25.06.2008**
(21) Numéro de dépôt: 05425094.9
(22) Date de dépôt: 23.02.2005
(51) Int. Cl.: A43B 5/04, B29D 31/515, B29D 31/518

(54) **Chaussure de sport avec une paroi comprenant deux couches distinctes bi-injectées**
Sportschuh mir einer Wand mit zwei unterschiedlichen, in zwei Stufen spritzgegossenen Schichten
Sports shoe with a wall comprising two distinct bi-injected layers

(43) Date de publication de la demande: 30.08.2006
(73) Titulaire: LANGE INTERNATIONAL S.A., 1700 Fribourg (CH)
(72) Inventeur: Marmonier, Gilles, 38960 St Etienne de Crossey (FR); Girolimetto, Giovanni, 31038 Paese (TV) (IT)
(74) Mandataire: Bugnion Genève

(56) Documents cités:
- EP-A- 0 823 323
- EP-A- 1 243 190
- FR-A- 2 468 323
- FR-A- 2 546 041
- FR-A- 2 630 894
- US-B1- 6 457 265

## Description

L'invention concerne tout ou partie de chaussure de sport, comme une coque ou un collier. Elle concerne aussi un procédé de fabrication d'une telle partie de chaussure de sport.

Un premier procédé de fabrication d'une chaussure de sport de l'art antérieur consiste à fabriquer séparément différents éléments plastiques par injection, puis à les assembler mécaniquement. Un avantage de cette solution est de permettre d'utiliser certains matériaux peu coûteux et parfois inesthétiques, mais aux propriétés physiques acceptables, pour certains éléments cachés par exemple. Un autre avantage est de rendre possible le recyclage par la séparation des différents matériaux utilisés. L'inconvénient d'une telle chaussure provient de son procédé de fabrication qui est long et coûteux, puisqu'il nécessite un moule spécifique pour chaque élément de chaussure, un stockage des différents éléments fabriqués séparément puis une étape d'assemblage mécanique de ces éléments.

Un autre procédé de fabrication de chaussure de sport de l'art antérieur connu par exemple de EP-A-1 243 190 consiste à utiliser la technique de la bi-injection, qui consiste en la fabrication de la paroi de la chaussure par l'injection d'une première couche avec un premier matériau plastique puis en la surinjection, directement sur cette première couche toujours disposée sur la forme interne de son moule, d'une seconde couche avec le même matériau ou un matériau plastique dit "compatible" avec celui de la première couche, afin d'obtenir une soudure naturelle des deux matériaux plastiques au niveau de leurs surfaces superposées. Cette technique permet d'obtenir des chaussures dont la paroi possède des propriétés mécaniques et une esthétique variables en ses différents points grâce à la combinaison de deux matériaux qui peuvent avoir des propriétés mécaniques différentes, comme leur rigidité, ainsi que des aspects variés. L'avantage de cette solution est de permettre une fabrication très rapide et peu coûteuse d'une chaussure. Toutefois, cette technique exige des matériaux plastiques compatibles, ce qui écarte certains matériaux plastiques bon marché qui conviennent mal à cette technique de fabrication. De plus, les différents matériaux se trouvant soudés, leur séparation n'est plus possible et le recyclage impossible.

Un premier objet de la présente invention consiste en la mise au point d'une chaussure de sport très peu coûteuse.

Un second objet de la présente invention consiste en un procédé de fabrication qui permet d'obtenir une chaussure de sport très peu coûteuse.

Un troisième objet de la présente invention consiste en une chaussure de sport et son procédé de fabrication qui favorisent le recyclage.

L'invention propose de combiner astucieusement les avantages des deux solutions de l'art antérieur rappelées ci-dessus. En effet, elle propose une chaussure dont la paroi comprend plusieurs couches distinctes au moins partiellement superposées, dans des matériaux plastiques différents, la ou les couche(s) cachée(s) se trouvant dans des matériaux plastiques bon marché et recouverte(s) par un matériau plastique plus coûteux mais dont l'esthétique est attrayante. De plus, selon l'invention, une telle chaussure est fabriquée par un procédé de multi-injection, permettant de former les différentes couches superposées par surinjection, avec des matériaux plastiques volontairement incompatibles pour éviter la soudure des différentes couches.

L'invention est plus précisément définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 est une vue de côté en perspective de la couche interne de la paroi d'une coque selon un mode d'exécution de l'invention ;
la figure 2 est une vue en perspective de la couche interne de la paroi d'un collier selon un mode d'exécution de l'invention ;
la figure 3 est une vue de côté en perspective d'une chaussure selon l'invention dont la couche interne de la paroi est recouverte par une couche externe ;
la figure 4 est une vue arrière en perspective de la chaussure de la figure 3.

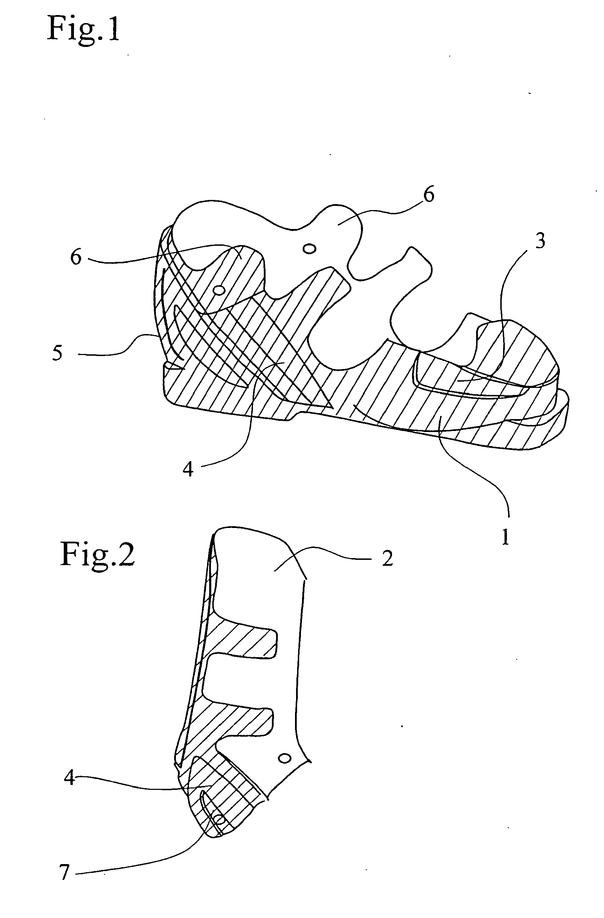

Les figures 1 à 4 illustrent donc une implémentation particulière de l'invention pour une chaussure de ski. Une telle chaussure comprend une paroi composée de l'association de deux couches partiellement superposées, une couche interne se composant d'une coque 1 et d'un collier 2 et une couche externe formant une coque 11 et un collier 12.

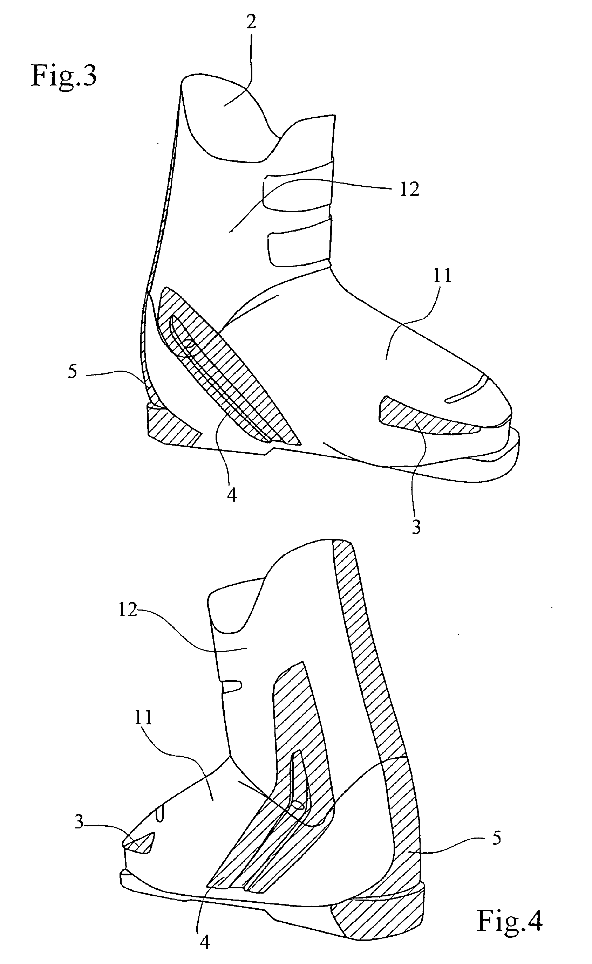

La coque 1 et le collier 2 de la couche interne de la paroi de la chaussure sont dans un premier matériau bon marché, comme du polyéthylène. Cette couche interne est présente sur les surfaces de la chaussure nécessitant une bonne rigidité. Elle comprend de plus trois parties protubérantes 3, 4 et 5 dont l'épaisseur est sensiblement égale à l'épaisseur totale de la paroi de la chaussure terminée, illustrée aux figures 3 et 4. Enfin, la coque 1 et le collier 2 comprennent des moyens 6, 7 pour permettre leur assemblage pour former la chaussure finale.

Les figures 3 et 4 représentent deux vues de la chaussure terminée dans laquelle la coque 1 et le collier 2 de la couche interne sont partiellement recouverts par une couche externe surinjectée distincte formant une coque 11 et un collier 12, dans un matériau différent. Un tel matériau doit avoir une esthétique attrayante car il forme l'essentiel de la surface visible de la chaussure, doit être très résistant à l'abrasion car exposé aux contraintes extérieures importantes et doit de plus posséder des propriétés mécaniques spécifiques pour convenir à son utilisation dans une chaussure de ski, notamment en terme de rigidité : le polyuréthane correspond par exemple à ces critères.

Les parties protubérantes 3, 4 et 5 de la couche interne ne sont pas recouvertes par la couche externe, se trouvent sensiblement au niveau de la surface extérieure de cette couche externe, et sont donc visibles de l'extérieur. Elles sont entourées par la couche externe de la paroi et permettent ainsi une liaison mécanique entre les deux couches internes et externes, tout en créant un effet esthétique attrayant. La liaison mécanique ainsi réalisée permet de maintenir les deux couches de la paroi fixes l'une par rapport à l'autre. Dans cet exemple, la couche interne comporte des protubérances, qui sont placées au sein d'ouverture de la couche externe. En variante, la couche interne pourrait comprendre des ouvertures occupées par le matériau de la couche externe. Plus généralement, toute forme des deux couches permettant leur liaison l'une par rapport à l'autre pourra convenir, comme toute liaison mâle femelle ou solidarisation par emboîtement.

Le procédé de fabrication de cette chaussure repose sur les étapes suivantes :
- fabrication de la couche interne 1, 2 de la paroi de la chaussure par une première injection, avec un premier matériau plastique, dans un premier moule comprenant une forme interne et une ou plusieurs parties constituant le moule externe ;
- sur-injection avec un second matériau plastique non compatible avec le premier matériau plastique de la couche externe sur la couche interne obtenue à l'étape précédente, toujours disposée sur la forme interne du premier moule.

Le résultat obtenu est donc la chaussure illustrée, comprenant une paroi en deux couches distinctes en matériaux plastiques différents, non liées par soudure et donc séparables, fixes l'une par rapport à l'autre.

Ainsi, le concept de l'invention consiste à utiliser le principe de fabrication de la multi-injection pour profiter de ses avantages de rapidité et de bas coût, mais en superposant des matériaux plastiques incompatibles, pour volontairement éviter leur soudure, contrairement à l'art antérieur, pour fabriquer des chaussures dont la paroi se compose de plusieurs couches distinctes, au moins partiellement superposées.

L'invention a été illustrée dans le cadre d'une chaussure de ski mais pourrait aussi s'appliquer à toute autre chaussure de sport. De plus, elle peut aussi s'appliquer sur une partie d'une chaussure seulement, comme une coque, un collier, une sangle, une bouclerie, comprenant au moins deux couches partiellement superposée. La seconde couche peut occuper une partie seulement de la surface de la première couche, sa totalité ou même une surface supérieure. Enfin, l'invention a été illustrée avec deux couches mais pourrait être implémentée avec plus de deux couches, réunissant plus de deux matériaux plastiques différents.

Finalement, cette solution présente donc les avantages suivants :
- le procédé de fabrication présente l'avantage de la multi-injection et est simple et économique : les différentes couches sont superposées autour d'un même moule interne commun, ce qui évite la nécessité de plusieurs moules totalement distincts. De plus, le résultat obtenu est directement la partie de chaussure finie et il n'y a pas besoin d'étapes de stockage puis d'assemblage de plusieurs éléments ;
- la paroi de la partie de chaussure se compose de plusieurs couches distinctes, au moins partiellement superposées, ce qui permet d'utiliser des matériaux bas coûts pour les couches cachées ;
- la partie de chaussure est très peu coûteuse puisque son procédé de fabrication est bon marché et de plus compatible avec des matériaux à bas coût ;
- les différents matériaux utilisés restent facilement séparables, ce qui permet le recyclage de ces chaussures, ainsi que le recyclage des chutes générées par le procédé de fabrication.

## Revendications

1. Procédé de fabrication d'une coque, d'un collier, d'une sangle ou d'une bouclerie de chaussure de sport comprenant les étapes suivantes :
- fabrication d'une première couche (1, 2) de la paroi de la partie de chaussure par une première injection, avec un premier matériau plastique, dans un moule ;
- sur-injection d'une seconde couche (11, 12), avec un second matériau plastique non compatible avec le premier matériau plastique de la première couche pour éviter la soudure des deux couches, sur la première couche obtenue à l'étape précédente toujours disposée sur au moins une partie du moule.

2. Procédé de fabrication d'une partie de chaussure de sport selon la revendication 1, **caractérisé en ce qu'**il comprend les étapes suivantes :
- formation d'une partie de liaison male (3, 4, 5) ou femelle sur la première couche (1, 2) de la paroi de la chaussure ;
- formation d'une partie de liaison correspondante femelle ou mâle sur la seconde couche (11, 12) pour obtenir une liaison mécanique entre les deux éléments.

3. Procédé de fabrication d'une partie de chaussure de sport selon la revendication 1 ou 2, **caractérisé en ce qu'**il comprend l'étape suivante :
- injection de la seconde couche (11, 12) sur une partie seulement de la surface de la première couche (1, 2).

4. Procédé de fabrication d'une partie de chaussure de sport selon la revendication 1 ou 2, **caractérisé en ce qu'**il comprend l'étape suivante :
- injection de la seconde couche (11, 12) sur une surface plus grande que celle de la première couche (1, 2).

5. Partie de chaussure de sport comprenant une paroi composée de deux couches en matériaux plastiques différents, **caractérisée en ce que** la partie de chaussure est une coque, un collier, une sangle ou une bouclerie, dont les deux couches de matériaux plastiques sont au moins partiellement superposées par surinjection, non liées entre elles par une soudure, fixes l'une par rapport à l'autre.

6. Partie de chaussure de sport selon la revendication 5, **caractérisée en ce que** la partie de chaussure est une coque ou un collier, et **en ce que** la première couche interne est en polyéthylène.

7. Partie de chaussure de sport selon la revendication 5 ou 6, **caractérisée en ce que** la partie de chaussure est une coque ou un collier, et **en ce que** la seconde couche est en polyuréthane.

8. Partie de chaussure de sport selon l'une des revendications 5 à 7, **caractérisée en ce que** les deux couches de matériaux plastiques non compatibles présentent des formes permettant leur liaison mécanique, comme toute liaison mâle femelle ou solidarisation par emboîtement.

9. Partie de chaussure de sport selon la revendication 8, **caractérisée en ce que** la première couche présente des protubérances (3, 4, 5) entourées et non recouvertes par la seconde couche afin d'être visibles depuis l'extérieur.

10. Partie de chaussure de sport selon l'une des revendications 8 ou 9, **caractérisée en ce que** la première couche présente des ouvertures occupées par le matériau de la seconde couche.

## Claims

1. Method of making a shell, cuff, strap or buckle for a sports boot, comprising the following steps:
- making a first layer (1, 2) of the wall of the boot part by a first injection of a first plastic material into a mould; and
- injection overmoulding a second layer (11, 12), of a second plastic material that is incompatible with the first plastic material of the first layer, to prevent the two layers welding together, onto the first layer produced in the preceding step which is still on at least part of the mould.

2. Method of making a sports boot part according to Claim 1, **characterized in that** it comprises the following steps:
- forming a male (3, 4, 5) or female connecting part on the first layer (1, 2) of the wall of the boot; and
- forming a corresponding female or male connecting part on the second layer (11, 12) to obtain a mechanical connection between the two elements.

3. Method of making a sports boot part according to Claim 1 or 2, **characterized in that** it comprises the following step:
- injecting the second layer (11, 12) onto only a part of the surface of the first layer (1, 2).

4. Method of making a sports boot part according to Claim 1 or 2, **characterized in that** it comprises the following step:
- injection moulding the second layer (11, 12) onto a larger surface than that of the first layer (1, 2).

5. Sports boot part comprising a wall made up of two layers of differing plastic materials, **characterized in that** the boot part is a shell, cuff, strap or buckle in which the two layers of plastic materials are at least partly superposed by injection overmoulding, are not attached to each other by a weld, and are fixed relative to each other.

6. Sports boot part according to Claim 5, **characterized in that** the boot part is a shell or cuff, and **in that** the inner first layer is polyethylene.

7. Sports boot part according to Claim 5 or 6, **characterized in that** the boot part is a shell or cuff, and **in that** the second layer is polyurethane.

8. Sports boot part according to one of Claims 5 to 7, **characterized in that** the two layers of incompatible plastic materials are shaped to allow their mechanical connection, such as any male/female connection or joining by mutual engagement.

9. Sports boot part according to Claim 8, **characterized in that** the first layer has protuberances (3, 4, 5) surrounded and not covered by the second layer so as to be visible from the exterior.

10. Sports boot part according to either of Claims 8 and 9, **characterized in that** the first layer has openings occupied by the material of the second layer.

## Patentansprüche

1. Verfahren zur Herstellung einer Schale, einer Manschette, eines Gurts oder einer Schliessvorrichtung eines Sportschuhs, welches die folgenden Schritte umfasst:
- Herstellung einer ersten Schicht (1, 2) der Wand des Teils des Schuhs durch eine erste Spritzung eines ersten Kunststoffmaterials in eine Spritzform;
- Überspritzung der ersten, durch den vorhergehenden Schritt erhaltenen Schicht, die noch immer auf wenigstens einem Teil der Spritzform angeordnet ist, mit einer zweiten Schicht (11, 12) aus einem zweiten Kunststoffmaterial, das mit dem ersten Kunststoffmaterial der ersten Schicht nicht verträglich ist, um die Verschweissung der beiden Schichten zu vermeiden.

2. Verfahren zur Herstellung eines Teils eines Sportschuhs nach Anspruch 1, **dadurch gekennzeichnet, dass** es die Folgenden Schritte umfasst:
- Formung eines ersten vorstehenden (3, 4, 5) oder vertieften Verbindungsteils auf der ersten Schicht (1, 2) der Wand des Schuhs;
- Formung eines entsprechenden vertieften oder vorstehenden Verbindungsteils auf der zweiten Schicht (11, 12), um eine mechanische Verbindung zwischen den beiden Elementen zu erhalten.

3. Verfahren nach Anspruch 1 oder 2, **dadurch gekennzeichnet, dass** es den folgenden Schritt umfasst:
- Spritzung einer zweiten Schicht (11, 12) auf nur einen Teil der Oberfläche der ersten Schicht (1, 2).

4. Verfahren nach Anspruch 1 oder 2, **dadurch gekennzeichnet, dass** es den folgenden Schritt umfasst:
- Spritzung einer zweiten Schicht (11, 12) auf eine grössere Oberfläche als die der ersten Schicht (1, 2).

5. Teil eines Sportschuhs mit einer Wand, die aus zwei Schichten aus verschiedenen Kunststoffmaterialien zusammengesetzt ist, **dadurch gekennzeichnet, dass** der Teil des Schuh eine Schale, eine Manschette, ein Gurt oder eine Schliessvorrichtung ist und beide Kunststoffmaterial-Schichten dieses Teils wenigstens teilweise durch Überspritzen überlagert, nicht durch Schweissung miteinander verbunden sind und in Bezug aufeinander fest liegen.

6. Teil eines Sportschuhs nach Anspruch 5, **dadurch gekennzeichnet, dass** der Teil des Schuhs eine Schale oder eine Manschette ist und dass die erste innere Schicht aus Polyäthylen besteht.

7. Teil eines Sportschuhs nach Anspruch 5 oder 6, **dadurch gekennzeichnet, dass** der Teil des Schuhs eine Schale oder eine Manschette ist und dass die zweite Schicht aus Polyurethan besteht.

8. Teil eines Sportschuhs nach einem der Ansprüche 5 bis 7, **dadurch gekennzeichnet, dass** die beiden nicht verträglichen Kunststoffmaterial-Schichten Formen haben, die ihre mechanische Verbindung erlauben, wie z. B. eine Verbindung aus Vorsprung und Vertiefung oder durch Verschachtelung.

9. Teil eines Sportschuhs nach Anspruch 8, **dadurch gekennzeichnet, dass** die erste Schicht Vorsprünge (3, 4, 5) hat, die von der zweiten Schicht umgeben, aber nicht bedeckt sind, damit sie von aussen sichtbar sind.

10. Teil eines Sportschuhs nach Anspruch 8 oder 9, **dadurch gekennzeichnet, dass** die erste Schicht Öffnungen hat, die von dem Material der zweiten Schicht ausgefüllt sind.
